# EUROPEAN PATENT APPLICATION

(11) **EP 4 761 327 A1**
(43) Date of publication of application: **17.06.2026**
(21) Application number: 24858578.8
(22) Date of filing: 27.08.2024
(51) Int. Cl.: H04W 24/02

(54) **COMMUNICATION METHOD AND COMMUNICATION APPARATUS**

(30) Priority: 28.08.2023 CN 202311096901
(71) Applicant: HUAWEI TECHNOLOGIES CO., LTD., Shenzhen 518129 (CN)
(72) Inventor: WANG, Hui, Shenzhen, Guangdong 518129 (CN); ZHANG, Xiaoyu, Shenzhen, Guangdong 518129 (CN); LIAO, Shuri, Shenzhen, Guangdong 518129 (CN); DOU, Shengyue, Shenzhen, Guangdong 518129 (CN); SHI, Meng, Shenzhen, Guangdong 518129 (CN); YANG, Liu, Shenzhen, Guangdong 518129 (CN); YU, Tong, Shenzhen, Guangdong 518129 (CN)
(74) Representative: Gill Jennings & Every LLP
(86) International application number: PCT/CN2024/114925
(87) International publication number: WO 2025/045044

(57) **Abstract**

This application provides a communication method and a communication apparatus. The method includes: A first network device receives at least one piece of first information from at least one terminal, where the first information indicates signal quality of a second cell, the second cell is a cell managed by a second network device, and the second cell is a neighbor cell of a first cell managed by the first network device. The first network device sends second information to the second network device based on the at least one piece of first information, where the second information indicates the second network device to adjust a coverage range of the second cell. Network communication quality can be improved.

## Description

This application claims priority to Chinese Patent Application No. 202311096901.0, filed with the China National Intellectual Property Administration on August 28, 2023 and entitled "COMMUNICATION METHOD AND COMMUNICATION APPARATUS", which is incorporated herein by reference in its entirety.

### TECHNICAL FIELD

This application relates to the communication field, and more specifically, to a communication method and a communication apparatus.

### BACKGROUND

Satellite communication can achieve wide-area or even global coverage by using high-, medium-, and low-orbit satellites, and can provide undifferentiated communication services for global users. An important direction of a current research is that a satellite communication system and a mobile communication network are integrated to jointly construct an integrated comprehensive sea, land, and air communication network with global seamless coverage, to meet ubiquitous various service requirements of terminals.

During satellite network deployment, to ensure continuous coverage in equatorial areas, sufficient satellite orbit planes need to be deployed. As a result, satellite orbit planes are dense in mid- and high-latitude regions of the earth, and coverage ranges of a plurality of satellites largely overlap. Consequently, signals of the plurality of satellites interfere with each other, causing a problem that terminal communication quality deteriorates.

### SUMMARY

Embodiments of this application provide a communication method and a communication apparatus, so that network communication quality can be improved.

According to a first aspect, a communication method is provided. The method may be performed by a first network device or a module (for example, a chip) disposed in (or used in) the first network device. The following uses an example in which the first network device performs the method for description.

The method includes: A first network device receives at least one piece of first information from at least one terminal, where the first information indicates signal quality of a second cell, the second cell is a cell managed by a second network device, and the second cell is a neighbor cell of a first cell managed by the first network device. The first network device sends second information to the second network device based on the at least one piece of first information, where the second information indicates the second network device to adjust a coverage range of the second cell.

According to the foregoing solution, a network device may obtain a result of measuring, in a serving cell, signal quality of a neighbor cell by a terminal, to negotiate with a neighbor network device that manages the neighbor cell to adjust a coverage range of the cell. This can reduce signal interference from the neighbor network device or reduce a quantity of network coverage vulnerabilities, ensure network coverage, provide a high-quality network communication service for the terminal, and improve network communication quality.

With reference to the first aspect, in some implementations of the first aspect, the second information includes the at least one piece of first information.

According to the foregoing solution, the second information that may be sent by the first network device to the second network device may include the signal quality of the second cell that is collected by the first network device and that is obtained through measurement by the at least one terminal in the first cell, so that the second network device can perform coverage range adjustment based on the signal quality of the second cell in the first cell, to reduce the signal interference from the neighbor network device or reduce the network coverage vulnerability.

With reference to the first aspect, in some implementations of the first aspect, the method further includes: The first network device receives fourth information from the second network device, where the fourth information indicates that the coverage range of the second cell is already adjusted.

According to the foregoing solution, after adjusting the coverage range of the second cell based on the second information, the second network device may indicate the first network device through the fourth information, so that the first network device and the second network device reach a consensus on the coverage range of the second cell.

With reference to the first aspect, in some implementations of the first aspect, the second information includes first indication information, where the first indication information indicates average signal quality of the second cell.

According to the foregoing solution, the first network device may determine the average signal quality of the second cell based on the signal quality of the second cell that is obtained through measurement by the at least one terminal, and indicate the second network device through the second information, so that the average signal quality serves as a reference for the second network device to adjust the coverage range.

With reference to the first aspect, in some implementations of the first aspect, the second information includes second indication information, and the second indication information indicates one of the following manners of adjusting the coverage range of the second cell:
increasing the coverage range, decreasing the coverage range, maintaining the coverage range, or turning off a part or all of the coverage range of the second cell.

According to the foregoing solution, the first network device may determine, based on the signal quality that is of the second cell and that is obtained through measurement by the terminal of the first cell, an adjusting manner in which the second network device adjusts the coverage range of the second cell; and indicate the second network device through the second information, so that the second network device can adjust the coverage range of the second cell based on the second information. In this way, the first network device and the second network device reach a consensus on the coverage range of the second cell, so as to reduce a quantity of signal interference problems and a quantity of coverage vulnerability problems.

With reference to the first aspect, in some implementations of the first aspect, the second information includes third indication information, and the third indication information indicates a parameter of the coverage range or a variation quantity of the parameter of the coverage range.

For example, the parameter of the coverage range includes one or more of the following:
an off-axis angle of a coverage edge, an angle of elevation of the coverage edge, a coverage radius, a side length of the coverage edge, or a coverage area.

According to the foregoing solution, the first network device may specifically indicate the second network device of the parameter of the coverage range of the second cell or the variation quantity of the parameter of the coverage range, so that the second network device can accurately adjust the coverage range of the second cell based on the third indication information.

With reference to the first aspect, in some implementations of the first aspect, the second information specifically indicates the second network device to adjust a coverage range corresponding to a reference signal of the second cell, and the second information includes information about the reference signal; or the second information specifically indicates to adjust a coverage range of a beam of the second cell, and the second information includes information about the beam.

According to the foregoing solution, the first network device may specifically indicate the second network device to adjust the coverage range of the reference signal or the beam of the second cell, so that the second network device can adjust the coverage range of the second cell at a fine granularity.

With reference to the first aspect, in some implementations of the first aspect, that the first network device receives the at least one piece of first information from the at least one terminal includes: The first network device receives the at least one piece of first information from the at least one terminal within first duration, where the first duration is period periodicity of a signal quality detection periodicity of the neighbor cell of the first network device.

According to the foregoing solution, the first network device may obtain, at a specific period, the signal quality of the neighbor cell that is obtained through measurement by the terminal in the first cell, so as to periodically determine a coverage range of the neighbor cell, and implement timely adjustment, to ensure network communication quality.

With reference to the first aspect, in some implementations of the first aspect, that the first network device sends the second information to the second network device based on the at least one piece of first information includes: The first network device determines a signal quality average difference between the signal quality of the second cell and signal quality of the first cell based on the at least one piece of first information; and sends the second information to the second network device based on the signal quality average difference.

According to the foregoing solution, the first network device may specifically determine, based on the signal quality average difference between the signal quality of the first cell and the signal quality of the second cell, whether the coverage range of the second cell needs to be adjusted. This provides a criterion for determining whether to adjust a coverage range of a cell.

With reference to the first aspect, in some implementations of the first aspect, the first information includes a signal quality difference between the signal quality of the second cell and the signal quality of the first cell.

According to the foregoing solution, the terminal determines the signal quality difference between the first cell and the second cell, and notifies the first network device, so that the first network device determines, through the signal quality difference that is determined by the at least one terminal and that is between the first cell and the second cell, whether the coverage range of the second cell needs to be adjusted.

With reference to the first aspect, in some implementations of the first aspect, average signal quality of the first cell is determined based on the signal quality of the first cell from the at least one terminal.

For example, the first information further indicates the signal quality of the first cell.

According to the foregoing solution, the first network device may further obtain the signal quality of the first cell from the at least one terminal, and the first network device compares the signal quality of the first cell with the signal quality of the second cell, to obtain the signal quality average difference, so as to determine whether the coverage range of the second cell needs to be adjusted.

With reference to the first aspect, in some implementations of the first aspect, the method further includes: When the average signal quality of the second cell is greater than average signal quality of the first cell, and the signal quality average difference is greater than a first threshold, the first network device determines to indicate the second network device to decrease the coverage range of the second cell, where the second information specifically indicates the second network device to decrease the coverage range of the second cell; or when the average signal quality of the second cell is less than the average signal quality of the first cell, and the signal quality average difference is greater than a second threshold, the first network device determines to indicate the second network device to increase the coverage range of the second cell, where the second information specifically indicates the second network device to increase the coverage range of the second cell.

According to a second aspect, a data transmission method is provided. The method may be performed by a second network device or a module (for example, a chip) disposed in (or used in) the second network device. The following uses an example in which the second network device performs the method for description.

The method includes: The second network device receives second information from a first network device, where the second information indicates the second network device to adjust a coverage range of a second cell, the second cell is a cell managed by the second network device, and the second cell is a neighbor cell of a first cell managed by the first network device; and adjusts the coverage range of the second cell based on the second information.

With reference to the second aspect, in some implementations of the second aspect, the second information includes the indicating at least one piece of first information, or the second information includes first indication information, where the first indication information indicates average signal quality of the second cell.

With reference to the second aspect, in some implementations of the second aspect, the method further includes: The second network device sends fourth information to the first network device, where the fourth information indicates that the coverage range of the second cell is already adjusted.

With reference to the second aspect, in some implementations of the second aspect, the second information includes second indication information, and the second indication information indicates one of the following manners of adjusting the coverage range of the second cell:
increasing the coverage range, decreasing the coverage range, maintaining the coverage range, or turning off a part or all of the coverage range of the second cell.

With reference to the second aspect, in some implementations of the second aspect, the second information includes third indication information, and the third indication information indicates a parameter of the coverage range or a variation quantity of the parameter of the coverage range.

With reference to the second aspect, in some implementations of the second aspect, the parameter includes one or more of the following:
an off-axis angle of a coverage edge, an angle of elevation of the coverage edge, a coverage radius, a side length of the coverage edge, or a coverage area.

With reference to the second aspect, in some implementations of the second aspect, the second information specifically indicates the second network device to adjust a coverage range corresponding to a reference signal of the second cell, and the second information includes information about the reference signal; or the second information specifically indicates to adjust a coverage range of a beam of the second cell, and the second information includes information about the beam.

According to a third aspect, a communication apparatus is provided. In a design, the apparatus may include modules that are in one-to-one correspondence with the methods/operations/steps/actions according to the first aspect or any one of the implementations of the first aspect. The modules may be implemented by a hardware circuit, software, or a combination of a hardware circuit and software. In a design, the apparatus includes: a transceiver unit, configured to receive at least one piece of first information from at least one terminal, where the first information indicates signal quality of a second cell, the second cell is a cell managed by a second network device, and the second cell is a neighbor cell of a first cell managed by the first network device; and a processing unit, configured to send second information to the second network device based on the at least one piece of first information, where the second information indicates the second network device to adjust a coverage range of the second cell.

In the third aspect, for specific content included in the first information and the second information and an indication manner, refer to the descriptions of the first aspect. Details are not described herein again.

With reference to the third aspect, in some implementations of the third aspect, the transceiver unit is further configured to receive fourth information from the second network device, where the fourth information indicates that the coverage range of the second cell is already adjusted.

With reference to the third aspect, in some implementations of the third aspect, the transceiver unit is specifically configured to receive the at least one piece of first information from the at least one terminal within first duration, where the first duration is periodicity duration of a signal quality detection periodicity of the neighbor cell of the first network device.

With reference to the third aspect, in some implementations of the third aspect, the processing unit is further configured to determine a signal quality average difference between the signal quality of the second cell and signal quality of the first cell based on the at least one piece of first information; and the transceiver unit is specifically configured to send the second information to the second network device based on the signal quality average difference.

With reference to the third aspect, in some implementations of the third aspect, when average signal quality of the second cell is greater than average signal quality of the first cell, and the signal quality average difference is greater than a first threshold, the processing unit is further configured to determine to indicate the second network device to decrease the coverage range of the second cell, where the second information specifically indicates the second network device to decrease the coverage range of the second cell; or when average signal quality of the second cell is less than average signal quality of the first cell, and the signal quality average difference is greater than a second threshold, the processing unit is further configured to determine to indicate the second network device to increase the coverage range of the second cell, where the second information specifically indicates the second network device to increase the coverage range of the second cell.

According to a fourth aspect, a communication apparatus is provided. In a design, the apparatus may include modules that are in one-to-one correspondence with the methods/operations/steps/actions according to the second aspect or any one of the implementations of the second aspect. The modules may be implemented by a hardware circuit, software, or a combination of a hardware circuit and software. In a design, the apparatus includes: a transceiver unit, configured to receive second information from a first network device, where the second information indicates a second network device to adjust a coverage range of a second cell, the second cell is a cell managed by the second network device, and the second cell is a neighbor cell of a first cell managed by the first network device; and a processing unit, configured to adjust the coverage range of the second cell based on the second information.

With reference to the fourth aspect, in some implementations of the fourth aspect, the transceiver unit is configured to send fourth information to the first network device, where the fourth information indicates that the coverage range of the second cell is already adjusted.

According to a fifth aspect, a communication apparatus is provided, and includes a processor. The processor may implement the method according to the foregoing first aspect or the foregoing second aspect and any one of the possible implementations of the first aspect or the second aspect. Optionally, the communication apparatus further includes a memory. The processor is coupled to the memory, and may be configured to execute instructions in the memory, to implement the method according to the foregoing first aspect or the foregoing second aspect and any one of the possible implementations of the first aspect or the second aspect. Optionally, the communication apparatus further includes a communication interface, and the processor is coupled to the communication interface. In this embodiment of this application, the communication interface may be a transceiver, a pin, a circuit, a bus, a module, or a communication interface of another type. This is not limited.

In an implementation, the communication apparatus is a communication device (for example, a network device). When the communication apparatus is the communication device, the communication interface may be a transceiver or an input/output interface.

In another implementation, the communication apparatus is a chip configured in the communication device. When the communication apparatus is the chip configured in the communication device, the communication interface may be an input/output interface.

Optionally, the transceiver may be a transceiver circuit. Optionally, the input/output interface may be an input/output circuit.

According to a sixth aspect, a processor is provided, and includes an input circuit, an output circuit, and a processing circuit. The processing circuit is configured to receive a signal through the input circuit, and transmit a signal through the output circuit, so that the processor performs the method according to the foregoing first aspect or the foregoing second aspect and any one of the possible implementations of the first aspect or the second aspect.

In a specific implementation process, the foregoing processor may be one or more chips, the input circuit may be an input pin, the output circuit may be an output pin, and the processing circuit may be a transistor, a gate circuit, a trigger, various logic circuits, or the like. An input signal received by the input circuit may be received and input by, for example, but not limited to, a receiver; a signal output by the output circuit may be output to, for example, but not limited to, a transmitter, and transmitted by the transmitter; and the input circuit and the output circuit may be a same circuit, where the circuit is used as the input circuit and the output circuit at different moments. Specific implementations of the processor and the various circuits are not limited in embodiments of this application.

According to a seventh aspect, a computer program product is provided. The computer program product includes: a computer program (which may also be referred to as code or instructions). When the computer program runs, a computer is enabled to perform the method according to the foregoing first aspect or the foregoing second aspect and any one of the possible implementations of the first aspect or the second aspect.

According to an eighth aspect, a computer-readable storage medium is provided. The computer-readable storage medium stores a computer program (which may also be referred to as code or instructions). When the computer program runs on a computer, the computer is enabled to perform the method according to the foregoing first aspect or the foregoing second aspect and any one of the possible implementations of the first aspect or the second aspect.

According to a ninth aspect, a communication system is provided, and includes the foregoing at least one first network device and the foregoing at least one second network device. Optionally, the communication system further includes the foregoing at least one terminal.

### BRIEF DESCRIPTION OF DRAWINGS

FIG. 1 is a diagram of an architecture of a communication system according to an embodiment of this application;
FIG. 2 is a diagram of an architecture of an NTN network applicable to an embodiment of this application;
FIG. 3 is a diagram of another architecture of an NTN network applicable to an embodiment of this application;
FIG. 4 is a schematic flowchart of a communication method according to an embodiment of this application;
FIG. 5 is a block diagram of an example of a communication apparatus according to an embodiment of this application; and
FIG. 6 is a diagram of a structure of another example of a communication apparatus according to an embodiment of this application.

### DESCRIPTION OF EMBODIMENTS

The following describes technical solutions of this application with reference to accompanying drawings.

In embodiments of this application, "/" may represent an "or" relationship between associated objects. For example, A/B may represent A or B. "And/or" may indicate that there are three relationships between associated objects. For example, A and/or B may represent the following three cases: Only A exists, both A and B exist, and only B exists, where A and B may be singular or plural. For ease of describing the technical solutions in embodiments of this application, terms such as "first" and "second" may be used for differentiation in embodiments of this application. The terms such as "first" and "second" do not limit a quantity or an execution sequence, and the terms such as "first" and "second" do not necessarily indicate a definite difference. In embodiments of this application, the word such as "example" or "for example" represents an example, evidence, or a description. Any embodiment or design solution described as "example" or "for example" should not be explained as being more preferred or having more advantages than another embodiment or design solution. A word such as "example" or "for example" is used to present a related concept in a specific manner for ease of understanding. In embodiments of this application, "at least one (type)" may alternatively be described as "one (type) or more (types)", and "a plurality of (types)" may be two (types), three (types), four (types), or more (types). This is not limited in this application.

The technical solutions in embodiments of this application may be applied to various communication systems, for example, a long term evolution (long term evolution, LTE) system, a 5G system or a new radio (new radio, NR), a non-terrestrial network (non-terrestrial network, NTN), and a future communication system like a 6^{th} generation mobile communication system. This is not limited in this application.

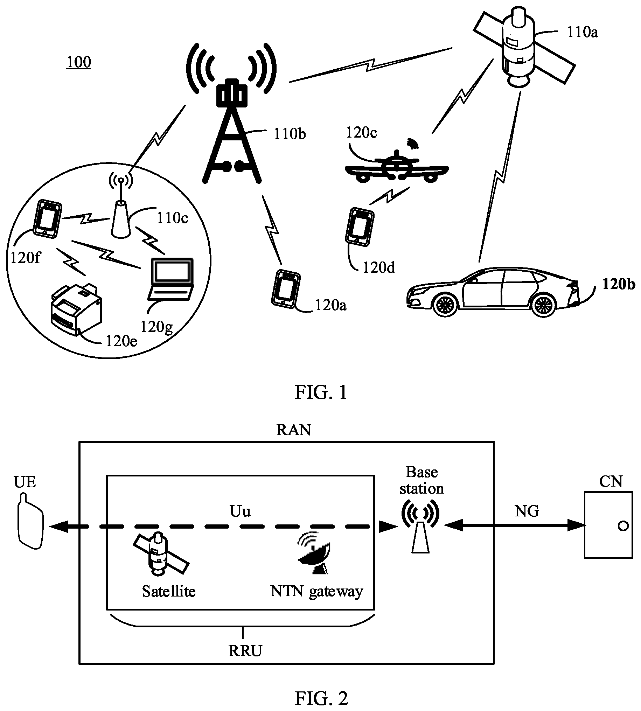

FIG. 1 is a diagram of an architecture of a communication system 100 applicable to an embodiment of this application. As shown in FIG. 1, the communication system 100 may include at least one access network device (for example, 110a, 110b, and 110c in FIG. 1), and may further include at least one terminal (for example, 120a to 120g in FIG. 1). Access network devices may be connected to each other in a wired or wireless manner. FIG. 1 is merely a diagram. The communication system may further include another network device, for example, may further include a wireless relay device and a wireless backhaul device.

In an NTN network, a satellite may implement transparent payload (transparent payload) transmission or regenerative payload (regenerative payload) transmission.

FIG. 2 is a diagram of an architecture of an NTN network applicable to an embodiment of this application. As shown in FIG. 2, user equipment (user equipment, UE) performs communication with a ground base station via the ground base station through a universal terrestrial radio access network-user (universal terrestrial radio access network-user, Uu) interface. A satellite may implement transparent payload transmission between a user and the ground base station. The satellite and an NTN gateway may be considered as a remote radio unit (remote radio unit) of the ground base station, and implement transparent forwarding of a signal. In other words, the satellite supports only functions such as radio frequency filtering and frequency conversion and amplification, with a signal waveform unchanged. Satellite forwarding is transparent to a terminal. The ground base station may communicate with a core network (core network, CN) through a next-generation network (next generation, NG) interface, and exchange non-access stratum (non-access stratum, NAS) signaling of the core network and service data of the UE through the NG interface.

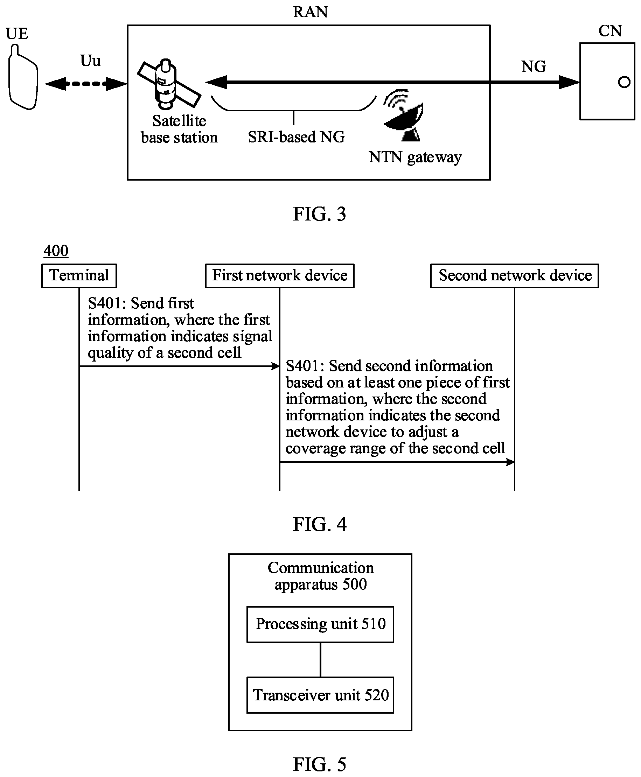

FIG. 3 is a diagram of another architecture of an NTN network applicable to an embodiment of this application. As shown in FIG. 3, a satellite has some or all functions of an access network device, may be referred to as a satellite base station, may provide a wireless access service, and schedule a wireless resource for a terminal that accesses a network through the satellite base station. The satellite base station communicates with UE through a Uu interface. The satellite base station may communicate with a CN through an NG interface, and the satellite base station and the core network may exchange NAS signaling and service data of the UE through the NG interface. A satellite radio interface (satellite radio interface, SRI) is a feeder link between an NTN gateway and the satellite. In FIG. 3, an SRI interface may serve as a part of the NG interface to implement communication and interaction between the satellite and the core network.

A network device provided in embodiments of this application may be an access network device, for example, a base station (base station), a satellite, a NodeB (NodeB), an evolved NodeB (evolved NodeB, eNodeB, or eNB), a transmission reception point (transmission reception point, TRP), a next generation NodeB (next generation NodeB, gNB) in a 5^{th} generation (5^{th} generation, 5G) mobile communication system, an access network node in an open radio access network (open radio access network, O-RAN, or open RAN), a next generation base station in a 6^{th} generation (6^{th} generation, 6G) mobile communication system, a base station in a future mobile communication system, or an access node in a wireless fidelity (wireless fidelity, Wi-Fi) system. Alternatively, the network device may be a module or a unit that completes some functions of the base station, for example, may be a central unit (central unit, CU), a distributed unit (distributed unit, DU), a central unit control plane (CU control plane, CU-CP) module, or a central unit user plane (CU user plane, CU-UP) module. The network device may be a satellite (for example, 110a in FIG. 1 or the satellite base station in FIG. 2), or may be a macro base station (for example, 110b in FIG. 1). Alternatively, the access network device may be a micro base station or an indoor base station (for example, 110c in FIG. 1), or may be a relay node or a donor node. A specific technology and a specific device form that are used by the access network device are not limited in this application.

In embodiments of this application, some or all functions of the network device may be on a non-terrestrial network (non-terrestrial network, NTN) platform (where the NTN platform includes but is not limited to a satellite, an unmanned aircraft system (unmanned aircraft system, UAS), a high altitude platform (high altitude platform station, HAPS), and the like), or some or all functions of the network device are on the ground, and the NTN platform is responsible for forwarding a signal between the UE and the access network device.

The terminal provided in embodiments of this application may also be referred to as a terminal device, and includes but is not limited to user equipment (user equipment, UE), a mobile station, a mobile terminal, or the like. The terminal may be widely used in various scenarios for communication. For example, the scenario includes but is not limited to at least one of the following scenarios: enhanced mobile broadband (enhanced mobile broadband, eMBB), ultra-reliable low-latency communication (ultra-reliable low-latency communication, URLLC), massive machine-type communication (massive machine-type communication, mMTC), device-to-device (device-to-device, D2D) communication, vehicle-to-everything (vehicle-to-everything, V2X) communication, machine-type communication (machine-type communication, MTC), internet of things (internet of things, IoT), virtual reality, augmented reality, industrial control, autonomous driving, telemedicine, smart grid, smart furniture, smart office, smart wearable, smart transportation, smart city, or the like. The terminal may be a mobile phone (for example, mobile phones 120a, 120d, and 120f in FIG. 1), a tablet computer, a computer (for example, a computer 120g in FIG. 1) having a wireless transceiver function, a wearable device, a vehicle (for example, 120b in FIG. 1), an uncrewed aerial vehicle, a helicopter, an airplane (for example, 120c in FIG. 1), a ship, a robot, a mechanical arm, a smart home device (for example, a printer 120e in FIG. 1), or the like. A specific technology and a specific device form that are used by the terminal are not limited in this application.

The access network device and/or the terminal may be at a fixed location, or may be movable. The access network device and/or the terminal may be deployed on land, including indoor or outdoor and handheld or vehicle-mounted devices; or may be deployed on water; or may be deployed on an airplane, a balloon, and an artificial satellite in the air. An environment/a scenario in which the access network device and the terminal are located is not limited in this application. The access network device and the terminal may be deployed in a same environment/scenario or different environments/scenarios. For example, the access network device and the terminal are both deployed on the land; or the access network device is deployed on the land, and the terminal is deployed on the water. Examples are not provided one by one.

It should be understood that in this application, "sending information/data to... (for example, a terminal)" may be understood as that a destination end of the information is the terminal; and may include directly or indirectly sending the information/data to the terminal. "Receiving information/data from... (for example, a terminal)" may be understood as that a source end of the information is the terminal; and may include directly or indirectly receiving the information/data from the terminal. The information/data may undergo necessary processing, for example, changing a format, between the source end for sending the information/data and the destination end. However, the destination end may understand valid information/data from the source end. A similar expression in this application may be understood similarly, and details are not described herein again.

In this application, "sending information/data" indicates only a transferring direction of the information/data. The direction includes direct sending through an air interface, and also includes indirect sending by a processing unit through an air interface. "Sending" may also be understood as "outputting" of a module interface. "Receiving information/data" indicates only a transferring direction of the information/data. The direction includes direct receiving through an air interface, and also includes indirect receiving by a processing unit through an air interface. "Receiving" may also be understood as "inputting" of a module interface.

It may be understood that, in this application, an example in which the network device and the terminal are used as execution bodies for illustrating interaction is used for illustration. However, the execution bodies for illustrating the interaction are not limited in this application. Functions/steps implemented by the network device in the methods in this application may also be implemented by a module (for example, a chip, a chip system, or a processor) used in the network device, or may be implemented by a logical node, a logical module, or software that can implement all or some of network device functions. The terminal in the methods in this application may also be a module (for example, a chip, a chip system, or a processor) used in the terminal, or may be a logical node, a logical module, or software that can implement all or some terminal functions.

Satellite constellation deployment in the NTN network may be a near-polar orbit constellation (Walker-star constellation) or an oblique circular orbit constellation (Walker-star-Delta constellation). Regardless of whether the near-polar orbit constellation or the oblique circular orbit constellation is used as a satellite deployment manner, sufficient orbital planes are required to ensure continuous coverage in equatorial areas. However, this causes orbital planes of mid- and high-latitude regions of the earth to be dense, and coverage ranges of satellites may overlap. Such a condition of coverage range overlapping is aggravated as the latitude increases, and may cause signal interference between the satellites. A simple processing manner is to turn off some satellites in overlapping coverage regions of mid and high latitudes, to alleviate the condition of coverage overlapping, and reduce signal interference. However, in this manner, a problem of a coverage vulnerability may occur, global seamless coverage cannot be implemented, and some terminals cannot obtain a network communication service.

For the foregoing problem of satellite coverage overlapping, this application proposes that a serving satellite may obtain a result of measuring signal quality of a neighbor cell by a terminal in a serving cell, to negotiate with a neighbor satellite that manages the neighbor cell, so as to adjust a coverage range of the cell. This can reduce signal interference from a neighbor network device or reduce a quantity of network coverage vulnerabilities, and improve communication quality of the terminal.

FIG. 4 is a schematic flowchart of a communication method 400 according to an embodiment of this application. The method 400 includes but is not limited to the following steps.

S401: A terminal sends first information to a first network device, where the first information indicates signal quality of a second cell.

Correspondingly, the first network device receives the first information from the terminal.

The first network device may send configuration information to at least one terminal in a first cell, where the configuration information is for configuring the at least one terminal to measure the signal quality of the second cell and report a measurement result. The terminal receives the configuration information from the first network device, performs measurement of the signal quality of the second cell based on the configuration information, and sends the first information to the first network device, to report, to the first network device, the signal quality of the second cell that is obtained through measurement by the terminal.

Optionally, the configuration information may be for configuring the at least one terminal to periodically measure and report the signal quality of the second cell. The terminal may periodically measure the signal quality of the second cell based on the configuration information, and report the signal quality to the first network device.

In an implementation, the first information includes the signal quality of the second cell that is obtained through measurement by the terminal.

For example, the signal quality may include one or more of a reference signal received power (reference signal received power, RSRP), reference signal strength indication (reference signal strength indication, RSSI), or a signal to interference plus noise ratio (signal to interference plus noise ratio, SINR).

Optionally, the first information may further include signal quality of the first cell that is obtained through measurement by the terminal.

The first network device may learn of the signal quality of the first cell and the signal quality of the second cell through the first information. In this way, the first network device may compare the signal quality of the first cell with the signal quality of the second cell obtained through measurement by the terminal, to determine whether signals of the first cell and the second cell interfere with each other, and determine whether a coverage range of the first cell needs to be adjusted, or indicate a second network device that manages the second cell to adjust a coverage range of the second cell. However, this application is not limited thereto. The terminal may alternatively report the signal quality of the first cell to the first network device through other information.

In another implementation, the first information includes a signal quality difference between the signal quality of the second cell and the signal quality of the first cell.

In other words, the terminal notifies the first network device of the signal quality of the second cell in a manner in which the first information includes the signal quality difference between the second cell and the first cell. The first network device may determine a difference condition between the signal quality of the second cell and the signal quality of the first cell based on the first information.

Specifically, the first information may indicate that the signal quality of the first cell is greater than, less than, or equal to the signal quality of the first cell, and indicate the signal quality difference between the signal quality of the first cell and the signal quality of the second cell. In other words, the terminal indicates, through the first information, whether the signal quality of the first cell is poorer, better, or the same as the signal quality of the second cell, and indicates a magnitude of the difference.

In an implementation, the first network device receives at least one piece of first information from at least one terminal within first duration, where the first duration is periodicity duration of a signal quality detection periodicity of a neighbor cell of the first network device.

For example, the first network device may collect, based on the signal quality detection period of a neighbor cell, statistics on the signal quality of the second cell that is obtained through measurement by the terminal in the first cell in each period, so as to determine whether a cell coverage range needs to be adjusted.

S402: The first network device sends second information to the second network device based on the at least one piece of first information, where the second information indicates the second network device to adjust the coverage range of the second cell.

Correspondingly, the second network device receives the second information from the first network device. Specifically, this may include but is not limited to the following manner 1 and manner 2.

Manner 1: The first network device determines, based on the at least one piece of first information from the terminal in the first cell, whether the second network device needs to adjust the coverage range of the second cell, so as to send the second information to the second network device.

The first network device may determine a signal quality average difference between the signal quality of the second cell and the signal quality of the first cell based on the obtained at least one piece of first information. The first network device sends the second information to the second network device based on the signal quality average difference.

For example, the first information includes the signal quality of the second cell, and the first network device may obtain, by using the first information or other information from the at least one terminal, the signal quality of the first cell that is obtained through measurement by the at least one terminal. The first network device may determine average signal quality of the second cell based on the signal quality of the second cell that is obtained through measurement by the at least one terminal, and determine average signal quality of the first cell based on the signal quality of the second cell that is obtained through measurement by the at least one terminal. Then, the first network device may determine a signal quality average difference between the average signal quality of the second cell and the average signal quality of the first cell. The first network device may determine, based on the signal quality average difference, whether the second network device needs to adjust the coverage range of the second cell, to reduce signal interference.

For another example, the first information may include the signal quality difference between the signal quality of the second cell and the signal quality of the first cell, and the first information specifically indicates a magnitude relationship between the signal quality of the second cell and the signal quality of the first cell. The first network device may determine the signal quality average difference between the signal quality of the second cell and the signal quality of the first cell based on the at least one piece of first information from the at least one terminal, so as to determine whether the second network device needs to adjust the coverage range of the second cell.

In an implementation, when the average signal quality of the second cell is greater than the average signal quality of the first cell, and the signal quality average difference is greater than a first threshold, the first network device determines to indicate the second network device to decrease the coverage range of the second cell, where the second information specifically indicates the second network device to decrease the coverage range of the second cell. Alternatively, when the average signal quality of the second cell is less than the average signal quality of the first cell, and the signal quality average difference is greater than a second threshold, the first network device determines to indicate the second network device to increase the coverage range of the second cell, where the second information specifically indicates the second network device to increase the coverage range of the second cell. Otherwise, the first network device determines to keep the coverage range of the second cell unchanged.

For example, the first network device determines, based on the at least one piece of first information, that the signal quality of the second cell is greater than the signal quality of the first cell. For example, the average signal quality of the second cell is greater than the average signal quality of the first cell, and the signal quality average difference is greater than the first threshold. The first network device may determine that signal interference between the first cell and the second cell is strong. Therefore, the first network device may send the second information to the second network device, and second indication information in the second information may indicate the second network device to decrease the coverage range of the second cell.

If the average signal quality of the second cell is greater than the average signal quality of the first cell, and the signal quality average difference is less than or equal to the first threshold, the first network device may consider that the signal interference between the first cell and the second cell is weak. Therefore, the coverage range of the second cell does not need to be adjusted, and the first network device may determine to keep the coverage range of the second cell unchanged.

For another example, the first network device determines, based on the at least one piece of first information, that the signal quality of the second cell is less than the signal quality of the first cell. For example, the average signal quality of the second cell is less than the average signal quality of the first cell, and the signal quality average difference is greater than the second threshold. The first network device may consider that a coverage vulnerability may exist between the first cell and the second cell, and a case in which a terminal cannot be normally handed over to maintain communication continuity may occur. Therefore, the first network device may send the second information to the second network device, and the second indication information in the second information may indicate the second network device to increase the coverage range of the second cell.

If the average signal quality of the second cell is less than the average signal quality of the first cell, and the signal quality average difference is less than or equal to the second threshold, the first network device may consider that the signal interference between the first cell and the second cell is weak, and there is no problem of the coverage vulnerability. Therefore, the coverage range of the second cell does not need to be adjusted, and the first network device may determine to keep the coverage range of the second cell unchanged.

In an implementation, the second information may include the second indication information, and the second indication information indicates one of the following manners of adjusting the coverage range of the second cell:
increasing the coverage range, decreasing the coverage range, maintaining the coverage range, or turning off a part or all of the coverage range of the second cell.

In an example, the second information may include the at least one piece of first information obtained by the first network device from the terminal. The second network device may increase, decrease, or maintain the coverage range of the second cell, or turn off a part or all of the coverage range of the second cell based on indication of the at least one piece of first information and the second indication information.

In another example, the second information may further include third indication information, and the third indication information indicates a parameter of the coverage range of the second cell or a variation quantity of the parameter of the coverage range.

For example, the parameter of the coverage range may include one or more of the following:
an off-axis angle of a coverage edge, an angle of elevation of the coverage edge, a coverage radius, the side length of the coverage edge, or a coverage area.

For example, if the second cell has circular coverage, the third indication information may indicate one or more parameters of the coverage range in the off-axis angle or the angle of elevation of the coverage edge, or the coverage radius, or a variation quantity of the one or more parameters of the coverage range. Alternatively, the second cell is in rectangular coverage, and the third indication information may indicate an off-axis angle and/or the side length of a coverage edge of the coverage range of the second cell, or a variation quantity of the off-axis angle and/or a variation quantity of the side length of the coverage edge. Alternatively, the third indication information may indicate the coverage area of the second cell or a variation quantity of the coverage area of the second cell.

The second network device increases, decreases, or maintains the coverage range of the second cell, or turns off a part or all of the coverage range of the second cell based on the second indication information and the third indication information in the second information.

Optionally, the second information may specifically indicate the second network device to adjust a coverage range corresponding to a reference signal of the second cell, and the second information may include information about the reference signal. Alternatively, the second information may specifically indicate the second network device to adjust a coverage range of a beam of the second cell, and the second information may include information about the beam of the second cell.

For example, the second network device may indicate the first network device of one or more reference signals (or beams) of the second cell that are neighboring to or overlap the coverage range of the first cell. The first network device may configure the terminal in the first cell to measure signal quality of the one or more reference signals (or beams), and the first information specifically includes the signal quality of the one or more reference signals (or beams). The first network device sends the second information to the second network device based on the at least one piece of first information of the at least one terminal, where the second information may include an identifier of the reference signal (or the beam) of the second cell. In a manner, the second information further includes the at least one piece of first information, and the second network device may increase, decrease, or maintain a coverage range of the one or more reference signals (or beams) based on the at least one piece of first information. In another manner, the second information further includes the third indication information, the third indication information specifically indicates a parameter or a variation quantity of the parameter of a coverage range of the reference signal (or the beam), and the second network device may adjust the coverage range of the reference signal (or the beam) based on the third indication information.

For example, if both the first network device and the second network device are satellites, the second information may be referred to as satellite coverage information. For example, the second information may be denoted as SatCoverageInfo. A format of the second information may be represented as follows:

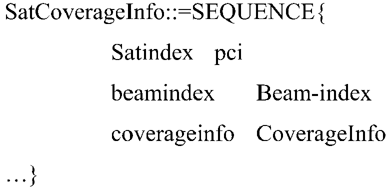

The second information may include satellite identification information, for example, the foregoing Satindex. The satellite identification information indicates a physical cell identifier (physical cell identifier, PCI) of the second cell, that is, the foregoing pci. Alternatively, if one satellite may manage one cell, the satellite identification information may indicate an identifier of the second network device. For example, the foregoing pci may be replaced with satindex. The second information may further include beam identifier information, for example, the foregoing beamindex. The beam identifier information indicates an identifier of a beam whose coverage range needs to be adjusted. For example, the beam identifier information indicates an identifier of one or more beams, that is, the foregoing Beam-index. Alternatively, the beam identifier information may be replaced with reference signal identifier information, for example, denoted as RSindex. The reference signal identifier information may indicate a synchronization signal block (synchronization signal block, SSB) identifier, for example, be denoted as an SSB-index and/or a reference signal identifier. For example, the reference signal identifier may be denoted as an RS-index, or the reference signal may be a channel state information-reference signal (channel state information-reference signal, CSI-RS), and the reference signal identifier may be denoted as a CSI-RS-index. Coverage information, that is, the foregoing coverageinfo, may include but is not limited to one or more of the at least one piece of first information, the second indication information, or the third indication information described above.

In another implementation, the second information may include the third indication information that indicates the parameter of the coverage range of the second cell, and does not include the second indication information. The first network device may adjust the coverage range of the second cell based on the parameter that is of the coverage range and that is indicated by the third indication information.

The foregoing describes Manner 1 provided in this embodiment of this application. The first network device may determine, based on a result that is obtained through measurement by the terminal in the second cell and that is collected in the first cell, to indicate, by using the second information, the second network device to increase, decrease, maintain, or turn off a part or all of the coverage range of the second cell. Alternatively, the first network device may determine, based on the result that is obtained through measurement by the terminal in the second cell and that is collected in the first cell, to indicate the parameter of the coverage range via the second information, so that the second network device adjusts the coverage range of the second cell based on an adjustment manner that is of the coverage range of the second cell and that is determined by the first network device.

Optionally, in Manner 1, the first network device may determine adjustment manners of the coverage ranges of the first cell and the second cell based on the at least one piece of first information, so as to reduce signal interference between the first cell and the second cell or reduce a quantity of problems of the coverage vulnerability. For example, the first network device may determine, based on a measurement result fed back by the terminal, to increase the coverage range of the first cell, and indicate, by using the second information, the second network device to reduce or maintain the coverage range of the second cell, or turn off a part or all of the coverage range. Alternatively, the first network device may determine, based on the measurement result fed back by the terminal, to decrease the coverage range of the first cell, and indicate, by using the second information, the second network device to increase or maintain the coverage range of the second cell. This is not limited in this application.

The following describes Manner 2 provided in this embodiment of this application.

Manner 2: After the first network device obtains the at least one piece of first information from the at least one terminal, the first network device sends the second information to the second network device, where the second information includes the at least one piece of first information. The second network device adjusts the coverage range of the second cell based on at least one piece of second information in the second information.

In this manner, the first network device collects the first information of the terminal in the first cell, obtains a result of measuring the signal quality of the second cell by the terminal in the first cell, and sends the result to the second network device by using the second information. The second network device determines, based on the result of measuring the signal quality of the second cell by the terminal in the first cell, whether to adjust the coverage range of the second cell, and how to adjust the coverage range of the second cell, for example, increase, decrease, or maintain the coverage range of the second cell, or turn off a part or all of the coverage range of the second cell.

In an implementation, after receiving the second information, the second network device may send fourth information to the first network device, where the fourth information indicates that the coverage range of the second cell is already adjusted.

The fourth information may indicate an adjustment result of the second cell. For example, the fourth information may indicate the second network device to increase, decrease, or maintain the coverage range of the second cell, or turn off a part or all of the coverage range of the second cell; and/or the fourth information may indicate a parameter of a coverage range obtained by adjusting the coverage range of the second cell by the second network device, or a variation quantity of the parameter of the coverage range. The first network device may determine, based on the fourth information, a result of adjusting the coverage range of the second cell by the second network device.

Optionally, after determining the result of adjusting the coverage range of the second cell by the second network device, the first network device may further adjust the coverage range of the first cell, to reduce signal interference between the first cell and the second cell, or reduce a quantity of network coverage vulnerabilities, so as to ensure communication quality of the terminal in the first cell.

According to the foregoing solution, a network device may obtain a result of measuring, in a serving cell, signal quality of a neighbor cell by a terminal, to negotiate with a neighbor network device that manages the neighbor cell to adjust a coverage range of the cell. This can reduce signal interference from the neighbor network device or reduce the quantity of network coverage vulnerabilities, so as to ensure communication quality of the terminal.

In an implementation of the embodiment shown in FIG. 4, the first information may indicate signal quality that is of a plurality of neighbor cells of the first cell and that is obtained by the terminal through measurement. The first network device receives a plurality of pieces of first information from a plurality of terminals within first duration, where the first duration is periodicity duration of a signal quality detection periodicity of a neighbor cell of the first network device. The first network device may determine an average quantity N of neighbor cells and average signal quality Q_{N} of each neighbor cell that are included in the plurality of pieces of first information. The first network device may further determine average signal quality Q_{S} of the first cell based on the plurality of pieces of first information or other information from the plurality of terminals.

When the average quantity N of the neighbor cells is less than an allowed quantity Nₜₕ of the neighbor cells, the first network device may determine, in the following determining manner, whether coverage ranges of the neighbor cells need to be adjusted.

If largest average signal quality QNₘₐₓ in the average signal quality Q_{N} of the plurality of neighbor cells is greater than the average signal quality Qₛ of the first cell, and QNₘₐₓ - Qₛ ≥ Qₜₕ, the first network device may determine to decrease a coverage range of a neighbor cell in the plurality of neighbor cells other than a neighbor cell with the largest average signal quality, and the first network device may indicate, via the second information, a network device corresponding to the neighbor cell whose coverage range needs to be decreased. Otherwise, the first network device may determine that coverage ranges of the first cell and the plurality of neighbor cells do not need to be adjusted.

When the average quantity N of the neighbor cells is greater than or equal to the allowed quantity Nₜₕ of the neighbor cells, the first network device may determine, in the following determining manner, whether the coverage ranges of the neighbor cells need to be adjusted.

If the largest average signal quality QNₘₐₓ in the average signal quality Q_{N} of the plurality of neighbor cells is greater than the average signal quality Qₛ of the first cell, and QNₘₐₓ - Qₛ ≥ Qₜₕ, the first network device may determine to decrease a coverage range of a neighbor cell in the plurality of neighbor cells other than the neighbor cell with the largest average signal quality, and the first network device may indicate, via the second information, a network device corresponding to the neighbor cell whose coverage range needs to be decreased. Otherwise, the first network device may determine to decrease a coverage range of each of the plurality of neighbor cells, and the first network device may indicate, via the second information, a network device corresponding to each of the plurality of neighbor cells.

According to the foregoing solution, a network device may obtain a result of measuring, in a serving cell, signal quality of a plurality of neighbor cells by a terminal, to negotiate with a neighbor satellite that manages the neighbor cells to adjust coverage ranges of the cells. This can reduce signal interference from a neighbor network device or reduce a quantity of network coverage vulnerabilities, so as to ensure communication quality of the terminal.

It may be understood that to implement functions in the foregoing embodiments, the base station and the terminal include corresponding hardware structures and/or software modules for performing various functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

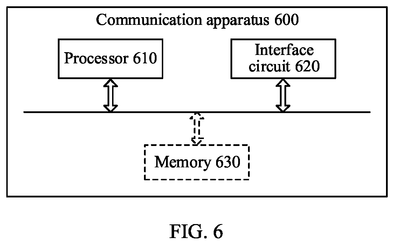

FIG. 5 and FIG. 6 are diagrams of structures of possible communication apparatuses according to embodiments of this application. These communication apparatuses may be configured to implement functions of the terminal, the first network device, or the second network device in the foregoing method embodiment, and therefore can also achieve beneficial effects of the foregoing method embodiments. In embodiments of this application, the communication apparatus may be one of the terminals 120a to 120j as shown in FIG. 1, or a network device 110a or 110b as shown in FIG. 1, or a module (for example, a chip or a chip system) used in the terminal or the network device.

The communication apparatus 500 includes a transceiver unit 520, and the transceiver unit 520 may be configured to receive or send information. The communication apparatus 500 may further include a processing unit 510, and the processing unit 510 may be configured to process instructions or data, to implement a corresponding operation.

It should be further understood that when the communication apparatus 500 is a chip disposed in (or used in) a communication device, the transceiver unit 520 in the communication apparatus 500 may be an input/output interface or a circuit of the chip, and the processing unit 510 in the communication apparatus 500 may be a processor in the chip.

Optionally, the communication apparatus 500 may further include a storage unit 530. The storage unit 530 may be configured to store instructions or data. The processing unit 510 may execute the instructions or the data stored in the storage unit, to enable the communication apparatus to implement a corresponding operation.

The communication apparatus 500 may be configured to implement functions of the first network device or the second network device in the method embodiment shown in FIG. 4.

When the communication apparatus 500 is configured to implement the functions of the first network device in the method embodiments shown in FIG. 4, the transceiver unit 520 is configured to receive at least one piece of first information from at least one terminal, where the first information indicates signal quality of a second cell, the second cell is a cell managed by the second network device, and the second cell is a neighbor cell of a first cell managed by the first network device; and the processing unit 510 is configured to send second information to the second network device based on the at least one piece of first information, where the second information indicates the second network device to adjust a coverage range of the second cell.

When the communication apparatus 500 is configured to implement functions of the second network device in the method embodiments shown in FIG. 4, the transceiver unit 520 is configured to receive the second information from the first network device, where the second information indicates the second network device to adjust the coverage range of the second cell, the second cell is a cell managed by the second network device, and the second cell is a neighbor cell of the first cell managed by the first network device; and the processing unit 510 is configured to adjust the coverage range of the second cell based on the second information.

For more detailed descriptions of the foregoing processing unit 510 and the foregoing transceiver unit 520, refer to related descriptions in the method embodiments shown in FIG. 4.

It should be understood that the transceiver unit 520 in the communication apparatus 500 may be implemented by using a communication interface (for example, a transceiver, a transceiver circuit, an input/output interface, or a pin). When the communication interface is a transceiver, the transceiver may include a receiver and/or a transmitter. The processing unit 510 in the communication apparatus 500 may be implemented by using at least one processor, and the processing unit 510 in the communication apparatus 500 may alternatively be implemented by using at least one logic circuit. Optionally, the communication apparatus 500 further includes a storage unit, and the storage unit may be implemented by a memory.

As shown in FIG. 6, a communication apparatus 600 includes a processor 610 and an interface circuit 620. The processor 610 and the interface circuit 620 are coupled to each other. It can be understood that the interface circuit 620 may be a transceiver or an input/output interface. Optionally, the communication apparatus 600 may further include a memory 630, configured to: store instructions executed by the processor 610, store input data required by the processor 610 to run the instructions, or store data generated after the processor 610 runs the instructions.

In an implementation, the memory 630 may alternatively be integrated into the processor 610, or may be independent of the processor 610.

When the communication apparatus 600 is configured to implement the method shown in FIG. 4, the processor 610 is configured to implement the function of the foregoing processing unit 610, and the interface circuit 620 is configured to implement the function of the foregoing transceiver unit 620.

When the foregoing communication apparatus is a chip used in a terminal, the chip in the terminal implements functions of the terminal in the foregoing method embodiments. The chip in the terminal receives information from another module (for example, a radio frequency module or an antenna) in the terminal, where the information is sent by a network device to the terminal. Alternatively, the chip in the terminal sends information to another module (for example, a radio frequency module or an antenna) in the terminal, where the information is sent by the terminal to a network device.

When the foregoing communication apparatus is a module used in the network device, the module of the network device may implement functions of the first network device or the second network device in the foregoing method embodiments. The module in the network device receives information from another module (for example, a radio frequency module or an antenna) in the network device, where the information is sent by the terminal to the network device. Alternatively, the module in the network device sends information to another module (for example, a radio frequency module or an antenna) in the network device, where the information is sent by the network device to a terminal. The module in the network device herein may be a baseband chip of the network device, or may be a DU or another module. The DU herein may be a DU in an open radio access network (open radio access network, O-RAN) architecture.

It can be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any regular processor.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. The storage medium may alternatively be a component of the processor. The processor and the storage medium may be located in an ASIC. In addition, the ASIC may be located in an access network device or a terminal. The processor and the storage medium may alternatively exist in the access network device or the terminal as discrete components.

According to the methods provided in embodiments of this application, an embodiment of this application further provides a computer program product. The computer program product includes computer program code. When the computer program code is executed by one or more processors, an apparatus including the processor is enabled to perform the method in embodiments shown in FIG. 4.

All or some of the foregoing embodiments may be implemented by using software, hardware, firmware, or any combination thereof. When software is used to implement embodiments, all or some of embodiments may be implemented in a form of a computer program product. The computer program product includes one or more computer programs or instructions. When the computer programs or the instructions are loaded and executed on a computer, all or some procedures or functions in embodiments of this application are executed. The computer may be a general-purpose computer, a dedicated computer, a computer network, a network device, user equipment, or another programmable apparatus.

According to the methods provided in embodiments of this application, an embodiment of this application further provides a computer-readable storage medium, and the computer-readable storage medium stores a computer program or instructions. When the computer program or the instructions are run by one or more processors, an apparatus including the processor is enabled to perform the method in embodiments shown in FIG. 4.

The computer program or the instructions may be stored in the computer-readable storage medium, or may be transmitted from a computer-readable storage medium to another computer-readable storage medium. For example, the computer program or the instructions may be transmitted from a website, computer, server, or data center to another website, computer, server, or data center in a wired or wireless manner. The computer-readable storage medium may be any usable medium accessible by a computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

According to the method provided in embodiments of this application, an embodiment of this application further provides a communication system, which includes one or more of the foregoing first network devices and one or more of the foregoing second network devices. The system may further include one or more of the foregoing terminals.

In several embodiments provided in this application, it should be understood that the disclosed system, apparatus, and method may be implemented in other manners. For example, the foregoing described apparatus is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located at one location, or may be distributed on a plurality of network units. Some or all of the units may be selected based on actual requirements to achieve the objectives of the solutions.

In various embodiments of this application, unless otherwise stated or there is a logic conflict, terms and/or descriptions in different embodiments are consistent and may be mutually referenced, and technical features in different embodiments may be combined to form a new embodiment based on an internal logical relationship thereof.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method is applied to a first network device or a chip in the first network device, and the method comprises:
receiving at least one piece of first information from at least one terminal, wherein the first information indicates signal quality of a second cell, the second cell is a cell managed by a second network device, and the second cell is a neighbor cell of a first cell managed by the first network device; and
sending second information to the second network device based on the at least one piece of first information, wherein the second information indicates the second network device to adjust a coverage range of the second cell.

2. The method according to claim 1, wherein the second information comprises the at least one piece of first information, or the second information comprises first indication information, wherein the first indication information indicates average signal quality of the second cell.

3. The method according to claim 2, wherein the method further comprises:
receiving fourth information from the second network device, wherein the fourth information indicates that the coverage range of the second cell is already adjusted.

4. The method according to any one of claims 1 to 3, wherein the second information comprises second indication information, and the second indication information indicates one of the following manners of adjusting the coverage range of the second cell:
increasing the coverage range, decreasing the coverage range, maintaining the coverage range, or turning off a part or all of the coverage range of the second cell.

5. The method according to any one of claims 1 to 4, wherein the second information comprises third indication information, and the third indication information indicates a parameter of the coverage range or a variation quantity of the parameter of the coverage range.

6. The method according to claim 5, wherein the parameter comprises one or more of the following:
an off-axis angle of a coverage edge, an angle of elevation of the coverage edge, a coverage radius, a side length of the coverage edge, or a coverage area.

7. The method according to any one of claims 1 to 6, wherein the second information indicates the second network device to adjust a coverage range corresponding to a reference signal of the second cell, and the second information comprises information about the reference signal; or
the second information indicates to adjust a coverage range of a beam of the second cell, and the second information comprises information about the beam.

8. The method according to any one of claims 1 to 7, wherein the receiving the at least one piece of first information from the at least one terminal comprises:
receiving the at least one piece of first information from the at least one terminal within first duration, wherein the first duration is periodicity duration of a signal quality detection periodicity of the neighbor cell of the first network device.

9. The method according to any one of claims 1 to 8, wherein the sending the second information to the second network device based on the at least one piece of first information comprises:
determining a signal quality average difference between the signal quality of the second cell and signal quality of the first cell based on the at least one piece of first information; and
sending the second information to the second network device based on the signal quality average difference.

10. The method according to claim 9, wherein the first information comprises a signal quality difference between the signal quality of the second cell and the signal quality of the first cell.

11. The method according to claim 9, wherein average signal quality of the first cell is determined based on the signal quality of the first cell from the at least one terminal.

12. The method according to claim 11, wherein the first information further indicates the signal quality of the first cell.

13. The method according to any one of claims 7 to 9, wherein the method further comprises:
when the average signal quality of the second cell is greater than average signal quality of the first cell, and the signal quality average difference is greater than a first threshold, determining to indicate the second network device to decrease the coverage range of the second cell, wherein the second information indicates the second network device to decrease the coverage range of the second cell; or
when the average signal quality of the second cell is less than the average signal quality of the first cell, and the signal quality average difference is greater than a second threshold, determining to indicate the second network device to increase the coverage range of the second cell, wherein the second information indicates the second network device to increase the coverage range of the second cell.

14. A communication method, wherein the method is applied to a second network device or a chip in the second network device, and the method comprises:
receiving second information from a first network device, wherein the second information indicates the second network device to adjust a coverage range of a second cell, the second cell is a cell managed by the second network device, and the second cell is a neighbor cell of a first cell managed by the first network device; and
adjusting the coverage range of the second cell based on the second information.

15. The method according to claim 14, wherein the second information comprises the indicating at least one piece of first information, or the second information comprises first indication information, wherein the first indication information indicates average signal quality of the second cell.

16. The method according to claim 15, wherein the method further comprises:
sending fourth information to the first network device, wherein the fourth information indicates that the coverage range of the second cell is already adjusted.

17. The method according to any one of claims 14 to 16, wherein the second information comprises second indication information, and the second indication information indicates one of the following manners of adjusting the coverage range of the second cell:
increasing the coverage range, decreasing the coverage range, maintaining the coverage range, or turning off a part or all of the coverage range of the second cell.

18. The method according to any one of claims 14 to 17, wherein the second information comprises third indication information, and the third indication information indicates a parameter of the coverage range or a variation quantity of the parameter of the coverage range.

19. The method according to claim 18, wherein the parameter comprises one or more of the following:
an off-axis angle of a coverage edge, an angle of elevation of the coverage edge, a coverage radius, a side length of the coverage edge, or a coverage area.

20. The method according to any one of claims 14 to 19, wherein the second information indicates the second network device to adjust a coverage range corresponding to a reference signal of the second cell, and the second information comprises information about the reference signal; or
the second information indicates to adjust a coverage range of a beam of the second cell, and the second information comprises information about the beam.

21. A communication apparatus, comprising:
a transceiver unit, configured to receive at least one piece of first information from at least one terminal, wherein the first information indicates signal quality of a second cell, the second cell is a cell managed by a second network device, and the second cell is a neighbor cell of a first cell managed by the first network device; and
a processing unit, configured to determine second information based on the at least one piece of first information, wherein the second information indicates the second network device to adjust a coverage range of the second cell, wherein
the transceiver unit is further configured to send the second information to the second network device.

22. A communication apparatus, comprising:
a transceiver unit, configured to receive second information from a first network device, wherein the second information indicates a second network device to adjust a coverage range of a second cell, the second cell is a cell managed by the second network device, and the second cell is a neighbor cell of a first cell managed by the first network device; and
a processing unit, configured to adjust the coverage range of the second cell based on the second information.

23. A communication apparatus, comprising at least one processor, coupled to a memory, wherein
the memory is configured to store a program or instructions; and
the at least one processor is configured to execute the program or the instructions, to enable the apparatus to implement the method according to any one of claims 1 to 20.

24. A chip, comprising at least one processor and a communication interface, wherein
the communication interface is configured to receive a signal from a communication apparatus other than the communication apparatus and transmit the signal to the processor, or send a signal from the processor to a communication apparatus other than the communication apparatus; and the processor is configured to implement the method according to any one of claims 1 to 20 by using a logic circuit or by executing code instructions.

25. A computer-readable storage medium, storing instructions, wherein when the instructions are run on a computer, the computer is enabled to perform the method according to any one of claims 1 to 20.

26. A computer program product, comprising instructions, wherein when the instructions are run by a computer, the computer is enabled to perform the method according to any one of claims 1 to 20.
